# EUROPEAN PATENT APPLICATION

(11) **EP 4 322 390 A1**
(43) Date of publication of application: **14.02.2024**
(21) Application number: 22275109.1
(22) Date of filing: 11.08.2022
(51) Int. Cl.: H02M 7/797, H02M 7/483, H02J 3/36, H02J 3/18

(54) **CONTROLLER FOR POWER ELECTRONIC DEVICE**

(71) Applicant: General Electric Technology GmbH, 5400 Baden (CH)
(72) Inventor: Soukkala, Raimo Juha, Tampere (FI); Laaja, Mikko Kauko Tapio, Tampere (FI)
(74) Representative: Openshaw & Co.

(57) **Abstract**

There is provided a controller for a power electronic device, the power electronic device comprising at least one module, the or each module including at least one switching element and at least one energy storage device, the or each switching element and the or each energy storage device in the or each module arranged to be combinable to selectively provide a voltage source, wherein the controller is programmed to adjust a target voltage reference of the or each energy storage device of the or each module responsive to a reactive current demand of the power electronic device.

## Description

This invention relates to a controller for a power electronic device, a power electronic device and a method of controlling a power electronic device, preferably for use in high voltage direct current (HVDC) power transmission or reactive power compensation.

In HVDC power transmission networks AC power is typically converted to DC power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance. DC power may also be transmitted directly from offshore wind parks to onshore AC power transmission networks.

The conversion between DC power and AC power is utilised where it is necessary to interconnect DC and AC networks. In any such power transmission network, converters (i.e. power converters) are required at each interface between AC and DC power to affect the required conversion from AC to DC or from DC to AC.

According to a first aspect of the invention, there is provided a controller for a power electronic device, the power electronic device comprising at least one module, the or each module including at least one switching element and at least one energy storage device, the or each switching element and the or each energy storage device in the or each module arranged to be combinable to selectively provide a voltage source, wherein the controller is programmed to adjust a target voltage reference of the or each energy storage device of the or each module responsive to a reactive current demand of the power electronic device.

The configuration of the controller according to the invention enables the variation of the target voltage reference across different operating points of the power electronic device in order to permit a reduction in the required number of modules in the power electronic device. This provides material savings and power loss capitalization savings, which can be particularly advantageous in projects with high loss capitalization values and higher overvoltage requirements.

The target voltage reference may be adjusted in various ways, non-limiting examples of which are described as follows and throughout the specification. In embodiments of the invention, the controller may be programmed to increase the target voltage reference of the or each energy storage device of the or each module responsive to an increase in capacitive reactive current demand of the power electronic device. In further embodiments of the invention, the controller may be programmed to reduce the target voltage reference of the or each energy storage device of the or each module responsive to an increase in inductive reactive current demand of the power electronic device. In still further embodiments of the invention, the target voltage reference in a capacitive reactive current range of the reactive current demand may be higher than the target voltage reference in an inductive reactive current range of the reactive current demand.

Adjustment of the target voltage reference may be carried out by using a target voltage reference adjustment value, which can be obtained in a variety of ways, non-limiting examples of which are described as follows and throughout the specification.

In a first example, the controller may be programmed to adjust the target voltage reference of the or each energy storage device of the or each module responsive to the reactive current demand of the power electronic device by selecting a target voltage reference adjustment value from a look-up table.

In a second example, the controller may be programmed to adjust the target voltage reference of the or each energy storage device of the or each module responsive to the reactive current demand of the power electronic device by calculating a target voltage reference adjustment value. The controller may include a processor or real-time solver programmed to carry out such calculation.

In embodiments of the invention, the controller may be programmed to set the target voltage reference of the or each energy storage device of the or each module to be at or greater than a predefined minimum value responsive to a rate of change of the reactive current demand towards a capacitive direction exceeding a predefined threshold. This ensures that the voltage of the or each energy storage of the or each module is high enough when the reactive current demand is rapidly changing towards the capacitive direction.

There may be provided a power electronic device comprising at least one module, the or each module including at least one switching element and at least one energy storage device, the or each switching element and the or each energy storage device in the or each module arranged to be combinable to selectively provide a voltage source, wherein the power electronic device further includes a controller according to any one of the first aspect of the invention and its embodiments. The power electronic device may be, but is not limited to, a voltage source-based converter or a static synchronous compensator.

According to a second aspect of the invention, there is provided a method of controlling a power electronic device, the power electronic device comprising at least one module, the or each module including at least one switching element and at least one energy storage device, the or each switching element and the or each energy storage device in the or each module arranged to be combinable to selectively provide a voltage source, wherein the method includes the step of adjusting a target voltage reference of the or each energy storage device of the or each module responsive to a reactive power demand of the power electronic device.

The features and advantages of the controller of the first aspect of the invention and its embodiments apply mutatis mutandis to the features and advantages of the method of the second aspect of the invention and its embodiments.

The method of the invention may include the step of increasing the target voltage reference of the or each energy storage device of the or each module responsive to an increase in capacitive reactive current demand of the power electronic device.

The method of the invention may include the step of reducing the target voltage reference of the or each energy storage device of the or each module responsive to an increase in inductive reactive current demand of the power electronic device.

In the method of the invention, the target voltage reference in a capacitive reactive current range of the reactive current demand may be higher than the target voltage reference in an inductive reactive current range of the reactive current demand.

The method of the invention may include the step of adjusting the target voltage reference of the or each energy storage device of the or each module responsive to the reactive current demand of the power electronic device by selecting a target voltage reference adjustment value from a look-up table.

The method of the invention may include the step of adjusting the target voltage reference of the or each energy storage device of the or each module responsive to the reactive current demand of the power electronic device by calculating a target voltage reference adjustment value.

The method of the invention may include the step of adjusting the target voltage reference of the or each energy storage device of the or each module to be at or greater than a predefined minimum value responsive to a rate of change of the reactive current demand towards a capacitive direction exceeding a predefined threshold.

In the method of the invention, the power electronic device may be, but is not limited to, a voltage source-based converter or a static synchronous compensator.

Each module may vary in configuration, non-limiting examples of which are set out as follows.

In a first exemplary configuration of a module, the or each switching element and the or each energy storage device in the module may be arranged to be combinable to selectively provide a unidirectional voltage source. For example, the module may include a pair of switching elements connected in parallel with an energy storage device in a half-bridge arrangement to define a 2-quadrant unipolar module that can provide zero or positive voltage and can conduct current in two directions.

In a second exemplary configuration of a module, the or each switching element and the or each energy storage device in the module may be arranged to be combinable to selectively provide a bidirectional voltage source. For example, the module may include two pairs of switching elements connected in parallel with an energy storage device in a full-bridge arrangement to define a 4-quadrant bipolar module that can provide negative, zero or positive voltage and can conduct current in two directions.

The plurality of modules may be connected in series to define a chain-link converter. The structure of the chain-link converter permits build-up of a combined voltage across the chain-link converter, which is higher than the voltage available from each of its individual modules, via the insertion of the energy storage devices of multiple modules, each providing its own voltage, into the chain-link converter. In this manner switching of the or each switching element in each module causes the chain-link converter to provide a stepped variable voltage source, which permits the generation of a voltage waveform across the chain-link converter using a step-wise approximation. Hence the chain-link converter is capable of providing a wide range of complex voltage waveforms.

At least one switching element may be a wide-bandgap material based switching element or a silicon semiconductor based switching element. Examples of wide-bandgap materials include, but are not limited to, silicon carbide, boron nitride, gallium nitride and aluminium nitride.

At least one switching element may include at least one self-commutated switching device. The or each self-commutated switching device may be an insulated gate bipolar transistor (IGBT), a gate turn-off thyristor (GTO), a field effect transistor (FET), a metal-oxide-semiconductor field-effect transistor (MOSFET), an injection-enhanced gate transistor (IEGT), an integrated gate commutated thyristor (IGCT), a bimode insulated gate transistor (BIGT) or any other self-commutated switching device. The number of switching devices in each switching element may vary depending on the required voltage and current ratings of that switching element.

At least one switching element may further include a passive current check element that is connected in anti-parallel with the or each switching device. The or each passive current check element may include at least one passive current check device. The or each passive current check device may be any device that is capable of limiting current flow in only one direction, e.g. a diode. The number of passive current check devices in each passive current check element may vary depending on the required voltage and current ratings of that passive current check element.

Each energy storage device may be any device that is capable of storing and releasing energy to selectively provide a voltage, e.g. a capacitor, fuel cell or battery.

The configuration of the power electronic device may vary depending on its operating requirements.

In embodiments of the invention, the power electronic device may include at least one converter limb, the or each converter limb extending between first and second terminals, the or each converter limb including first and second limb portions separated by an AC terminal, each limb portion including at least one module.

In a preferred embodiment of the invention, the power electronic device includes three converter limbs, each of which is connectable via the respective AC terminal to a respective phase of a three-phase AC network. It will be appreciated that the power electronic device may include a different number of converter limbs, each of which is connectable via the respective AC terminal to a respective phase of an AC network with the corresponding number of phases.

In further embodiments of the invention, the power electronic device may include a plurality of limb portions interconnected in a wye or delta configuration, each limb portion including at least one module.

It will be understood that the controller may be implemented as a single control unit or a plurality of control units. For example, the controller may include a plurality of control units, each of which is configured to control a respective module or a respective switching element. Each control unit may be configured to communicate with at least one other control unit via telecommunications links and/or a central control unit. Each control unit may be configured to communicate with a central control unit via telecommunications links.

In embodiments employing a plurality of controllers, the controllers may be implemented as separate controllers or may be implemented as part of the same control system. Each controller may be configured to communicate with at least one other controller via telecommunications links and/or a central controller (also known as a global controller). Each controller may be configured to communicate with a central controller via telecommunications links.

It will be appreciated that the use of the terms "first" and "second", and the like, in this patent specification is merely intended to help distinguish between similar features, and is not intended to indicate the relative importance of one feature over another feature, unless otherwise specified.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

Preferred embodiments of the invention will now be described, by way of non-limiting examples, with reference to the accompanying drawings in which:
Figures 1a and 1b show a static synchronous compensator according to an embodiment of the invention;
Figure 1c shows a static synchronous compensator according to another embodiment of the invention;
Figure 2 shows a schematic view of an exemplary half-bridge chain-link module;
Figure 3 shows a schematic view of an exemplary full-bridge chain-link module;
Figure 4 illustrates a reactive power exchange between an AC network and the static synchronous compensator of the invention; and
Figures 5 and 6 illustrate exemplary variations of a target voltage reference of a capacitor with reactive current demand of the static synchronous compensator 20 of the invention.

The figures are not necessarily to scale, and certain features and certain views of the figures may be shown exaggerated in scale or in schematic form in the interests of clarity and conciseness.

The following embodiment of the invention is used primarily in HVDC applications, but it will be appreciated that the following embodiment of the invention is applicable mutatis mutandis to other applications operating at different voltage levels. The following embodiment of the invention is described with reference to a static synchronous compensator, but it will be appreciated that the following embodiment of the invention is applicable mutatis mutandis to other types of power electronic devices, such as voltage source-based converters.

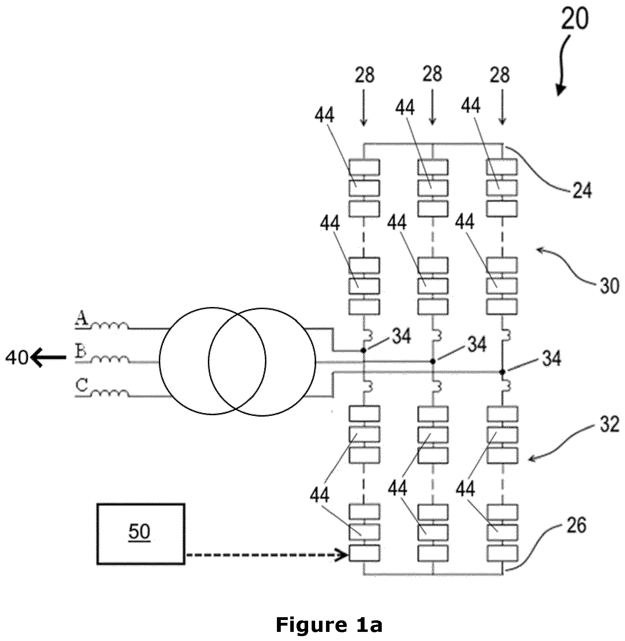

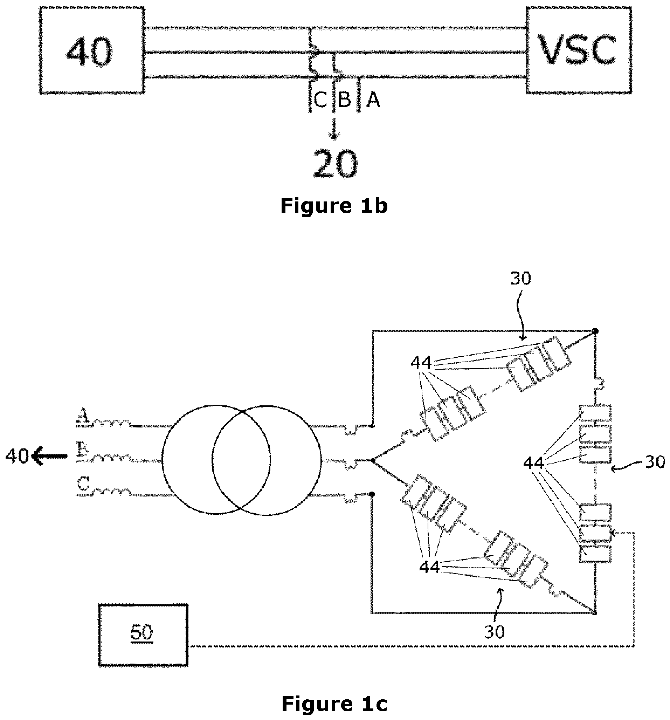

A static synchronous compensator according to an embodiment of the invention is shown in Figures 1a and 1b and is designated generally by the reference numeral 20.

The static synchronous compensator 20 includes first and second common terminals 24,26 and a plurality of converter limbs 28. Each converter limb 28 extends between the first and second common terminals 24,26 and includes first and second limb portions 30,32 separated by a respective AC terminal 34. In each converter limb 28, the first limb portion 30 extends between the first common terminal 24 and the AC terminal 34, while the second limb portion 32 extends between the second common terminal 26 and the AC terminal 34. In this way, the first limb portions 30 are interconnected in a wye configuration, and the second limb portions 32 are interconnected in another wye configuration.

In use, the AC terminal 34 of each converter limb 28 of the static synchronous compensator 20 is connected in shunt to a respective AC phase of a three-phase AC network 40 via a transformer arrangement 42, as shown in Figure 1b. It is envisaged that, in embodiments of the invention, the transformer arrangement 42 may be a star-star or star-delta transformer arrangement, may be another type of transformer arrangement or may be omitted altogether. The three-phase AC network 40 is an AC power grid 40.

In other embodiments of the invention, it is envisaged that the static synchronous compensator 20 may omit either the first limb portions 30 or the second limb portions 32.

In other embodiments of the invention, it is envisaged that a plurality of limb portions 30 may be interconnected in a delta configuration so that each limb portion 30 is connected in series between a respective two of the AC phases, as shown in Figure 1c.

Each limb portion 30,32 includes a switching valve, which includes a chain-link converter that is defined by a plurality of series-connected modules 44.

Each module 44 may vary in topology, examples of which are described as follows.

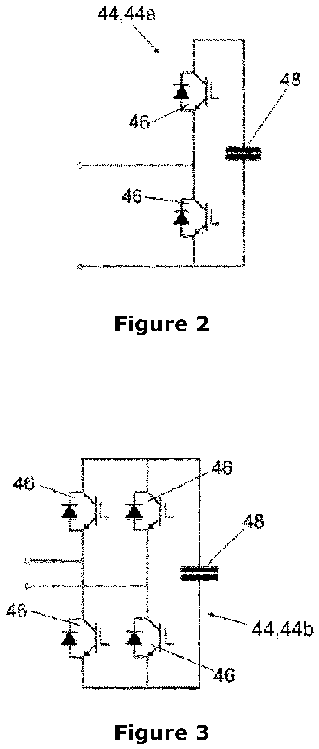

Figures 2 and 3 show schematically the structure of an exemplary module 44 in the form of a half-bridge module 44a. The half-bridge module 44a includes a pair of switching elements 46 and a capacitor 48. Each switching element 46 of the half-bridge module 44a is in the form of an IGBT which is connected in parallel with an anti-parallel diode. The pair of switching elements 46 are connected in parallel with the capacitor 48 in a half-bridge arrangement to define a 2-quadrant unipolar module 44a that can provide zero or positive voltage and can conduct current in both directions.

Figure 3 shows schematically the structure of an exemplary module 44 in the form of a full-bridge module 44b. The full-bridge module 44b includes two pairs of switching elements 46 and a capacitor 48. Each switching element 46 of the full-bridge module 44b is in the form of an IGBT which is connected in parallel with an anti-parallel diode. The pairs of switching elements 46 are connected in parallel with the capacitor 48 in a full-bridge arrangement to define a 4-quadrant bipolar module 44b that can provide negative, zero or positive voltage and can conduct current in both directions.

The structure of a given module 44 includes the arrangement and type of switching elements 46 and energy storage device 48 used in the given module 44. It will be appreciated that it is not essential for all of the modules 44 to have the same module structure. For example, the plurality of modules 44 may comprise a combination of half-bridge modules 44a and full-bridge modules 44b.

It is envisaged that, in other embodiments of the invention, each switching element 46 of each module 44 may be replaced by a gate turn-off thyristor (GTO), a field effect transistor (FET), a metal-oxide-semiconductor field-effect transistor (MOSFET), an injection-enhanced gate transistor (IEGT), an integrated gate commutated thyristor (IGCT), a bimode insulated gate transistor (BIGT) or any other self-commutated semiconductor device. It is also envisaged that, in other embodiments of the invention, each diode may be replaced by a plurality of series-connected diodes.

The capacitor 48 of each module 44 is selectively bypassed or inserted into the corresponding chain-link converter by changing the states of the switching elements 46. This selectively directs current through the capacitor 48 or causes current to bypass the capacitor 48, so that the module 44 provides a zero or non-zero voltage.

The capacitor 48 of the module 44 is bypassed when the switching elements 46 in the module 44 are configured to form a short circuit in the module 44, whereby the short circuit bypasses the capacitor 48. This causes current in the corresponding chain-link converter to pass through the short circuit and bypass the capacitor 48, and so the module 44 provides a zero voltage, i.e. the module 44 is configured in a bypassed mode.

The capacitor 48 of the module 44 is inserted into the corresponding chain-link converter when the switching elements 46 in the module 44 are configured to allow the current in the corresponding chain-link converter to flow into and out of the capacitor 48. The capacitor 48 then charges or discharges its stored energy so as to provide a non-zero voltage, i.e. the module 44 is configured in a non-bypassed mode.

In this manner the switching elements 46 in each module 44 are switchable to control flow of current through the corresponding capacitor 48.

It is possible to build up a combined voltage across each chain-link converter, which is higher than the voltage available from each of its individual modules 44, via the insertion of the capacitors of multiple modules 44, each providing its own voltage, into each chain-link converter. In this manner switching of the switching elements 46 in each module 44 causes each chain-link converter to provide a stepped variable voltage source, which permits the generation of a voltage waveform across each chain-link converter using a step-wise approximation. Hence, the switching elements 46 in each limb portion 30,32 are switchable to selectively permit and inhibit flow of current through the corresponding capacitor 48 in order to control a voltage across the corresponding limb portion 30,32.

It is envisaged that, in other embodiments of the invention, each module 44 may be replaced by another type of module which includes at least one switching element and at least one energy storage device, the or each switching element and the or each energy storage device in each such module arranged to be combinable to selectively provide a voltage source.

It is also envisaged that, in other embodiments of the invention, the capacitor 48 in each module 44 may be replaced by another type of energy storage device which is capable of storing and releasing energy to provide a voltage, e.g. a battery or a fuel cell.

The static synchronous compensator further includes a controller 50 configured, e.g. programmed, to control the switching of the switching elements 46.

For the purposes of simplicity, the controller 50 is exemplarily described with reference to its implementation as a single control unit. In other embodiments, the controller 50 may be implemented as a plurality of control units. The configuration of the controller 50 may vary depending on specific requirements of the static synchronous compensator 20. For example, the controller 50 may include a plurality of control units, each of which is configured to control the switching of the switching elements 46 of a respective one of the modules 44. Each control unit may be configured to be internal to, or external of, the corresponding module 44. Alternatively, the controller may include a combination of one or more control units internal to the corresponding module 44 and one or more control units external of the corresponding module 44. Each control unit may be configured to communicate with at least one other control unit via telecommunications links.

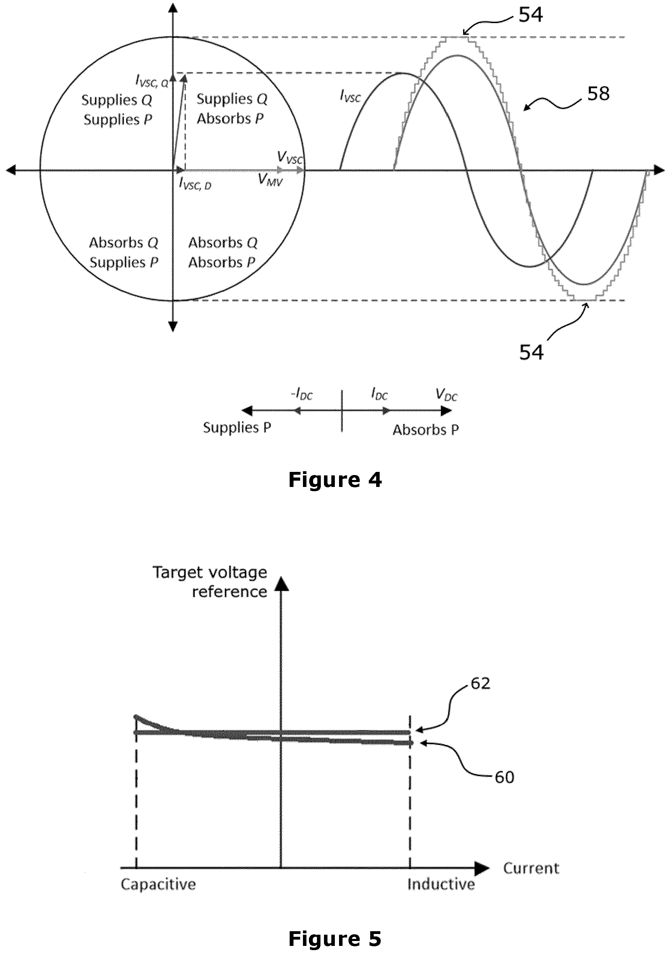

Operation of the static synchronous compensator 20 is described as follows with reference to Figures 4 to 6.

In order to exchange reactive power with the AC network 40, the controller 50 controls the switching of the switching elements 46 of the modules 44 to switch the capacitors 48 of the respective limb portions 30,32 into and out of circuit between the respective common and AC terminals 24,26,34. The controller 50 switches the switching elements 46 of the modules 44 of each limb portion 30,32 to provide a stepped variable voltage source between the respective common and AC terminals 24,26,34 and thereby generate a voltage waveform so as to control the configuration of an AC voltage waveform at the corresponding AC terminal 34 to facilitate the exchange of reactive power with the AC network 40.

Figure 4 illustrates the reactive power exchange between the AC network 40 and the static synchronous compensator 20. Depending on the magnitude of the AC voltage waveform 58, the static synchronous compensator 20 can either produce leading power or absorb lagging power. Capacitive power is produced when the voltage vector is greater than the voltage across the AC phases. Inductive power is absorbed when the voltage vector is lower than the voltage across the AC phases.

As explained above, the magnitude of the AC voltage waveform 58 is controlled by controlling each module 44 to provide a positive, negative or zero output voltage. For each phase, the maximum positive voltage of the AC voltage waveform 58 is generated when all modules 44 of the first limb portion 30 are providing positive output voltages. Conversely, for each phase, the maximum negative voltage of the AC voltage waveform 58 is generated when all modules 44 of the second limb portion 32 are providing negative output voltages. As a result, for each phase, the maximum voltage of the AC voltage waveform 58 is the sum of the voltages of the capacitors 48 of the modules 44 of the relevant limb portion 30,32.

At a maximum capacitive operating point of the static synchronous compensator 20, the maximum voltage of the AC voltage waveform must be sufficiently high to generate requested currents through coupling reactors interconnecting the static synchronous compensator 20 and the AC phases. A minimum number of modules 44 is required to generate the required maximum voltage of the AC voltage waveform. Conventionally the modules 44 have a fixed target voltage reference.

By increasing a target voltage reference of each capacitor 48, it becomes possible to generate a higher maximum voltage 54 of the AC voltage waveform 58. Alternatively, by increasing a target voltage reference of each capacitor 48, a lower number of modules 44 is required to generate the original maximum voltage of the AC voltage waveform 58. A reduction in the required number of modules 44 is desirable because it provides material savings and power loss capitalization savings.

However, in each module 44, a failure rate of the switching elements 46, and therefore the module 44, increases with the voltage of the capacitor 48. In particular, a failure rate of the IGBTs increases exponentially with the voltage of the capacitor 48. A high failure rate is undesirable because it limits the availability of the static synchronous compensator 20.

The inventors have devised a solution to compensate for the increased failure rate arising from the increase in capacitor voltage at the maximum capacitive operating point of the static synchronous compensator 20 while enabling a reduction in the required number of modules 44.

During the lifetime of the static synchronous compensator 20, it will be operating at close to zero power and also will be operating for a small amount of time at its maximum capacitive operating point.

Instead of using the conventional fixed target voltage reference, the controller 50 of the invention is programmed to adjust a target voltage reference of the capacitor 48 of each module 44 responsive to a reactive current demand of the static synchronous compensator 20. This enables the reduction of the target voltage reference, and thereby the reduction of the capacitor voltage, at other operating points of the static synchronous compensator 20 in order to compensate for the increased failure rate arising from the increase in capacitor voltage at the maximum capacitive operating point of the static synchronous compensator 20. Specifically, the ability to reduce the capacitor voltage at the other operating points of the static synchronous compensator 20 in turn reduces the overall failure rate of the IGBTs and modules 44 whilst permitting the reduction in the required number of modules 44 due to the increase in capacitor voltage at the maximum capacitive operating point of the static synchronous compensator 20.

Figure 5 illustrates an exemplary variation of the target voltage reference 60 of a capacitor 48 with reactive current demand of the static synchronous compensator 20. The controller 50 is programmed to increase the target voltage reference 60 of the capacitor 48 of each module 44 responsive to an increase in capacitive reactive current demand of the static synchronous compensator 20. The controller is programmed to reduce the target voltage reference 60 of the capacitor 48 of each module 44 responsive to an increase in inductive reactive current demand of the static synchronous compensator 20. The target voltage reference 60 in a capacitive reactive current range of the reactive current demand is higher than the target voltage reference 60 in an inductive reactive current range of the reactive current demand. At the maximum capacitive operating point of the static synchronous compensator 20, the target voltage reference 60 is preferably higher than the conventional fixed target voltage reference 62. At the maximum inductive capacitive operating point of the static synchronous compensator 20, the target voltage reference 60 is preferably lower than the conventional fixed target voltage reference 62.

The controller 50 may be programmed to adjust the target voltage reference of the capacitor 48 of each module 44 responsive to the reactive current demand of the static synchronous compensator 20 by selecting a target voltage reference adjustment value from a look-up table. The look-up table provides a list of discrete target voltage reference adjustment values, each of which corresponds to a respective one of discrete reactive current demand values.

Additionally or alternatively, the controller 50 may be programmed to adjust the target voltage reference of the capacitor 48 of each module 44 responsive to the reactive current demand of the static synchronous compensator 20 by calculating a target voltage reference adjustment value. The controller 50 may include a processor or real-time solver programmed to carry out such calculation.

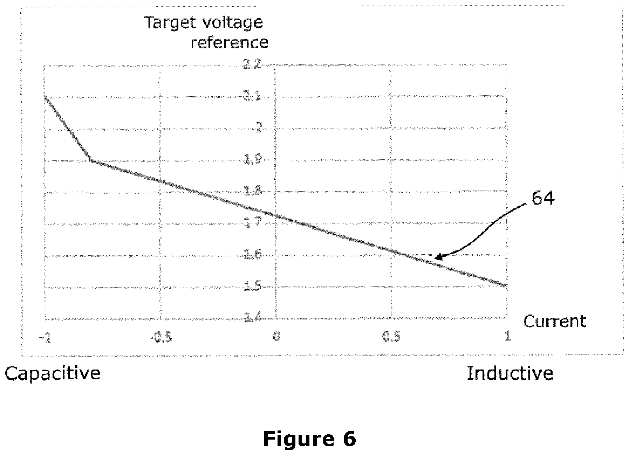

Figure 6 illustrates an exemplary variation of the target voltage reference 64 of a capacitor 48 with reactive current demand of the static synchronous compensator 20.

In Figure 6, the target voltage reference 64 is defined using two formulas, where I_{qref} is the reactive current demand, the '-' sign applies to capacitive reactive currents and the '+' sign applies to inductive reactive currents. In the first formula, the target voltage reference 64 is equal to (-1.0 × I_{qref} + 1.1). The first formula applies in the range of 80% to 100% of the maximum capacitive reactive current. In the second formula, the target voltage reference 64 is equal to (-0.222 × I_{qref} + 1.7224). The second formula applies in the range of 0% to 80% of the maximum capacitive reactive current and 0% to 100% of the maximum inductive reactive current.

Optionally, to ensure that the capacitor voltage of each module 44 is sufficiently high in circumstances where I_{qref} is rapidly changing towards the maximum capacitive operating point, the controller 50 may be programmed to set the target voltage reference 64 of the capacitor 48 of each module 44 to be at or greater than a predefined minimum value responsive to a rate of change of the reactive current demand towards a capacitive direction exceeding a predefined threshold. The value of the predefined threshold may vary depending on the operating parameters and requirements of the static synchronous compensator 20.

If the rate of change of the reactive current demand towards the capacitive direction exceeds the predefined threshold at any operating point of the static synchronous compensator 20, then the target voltage reference 64 is defined using the first formula, which ensures that the target voltage reference 64 at the maximum capacitive operating point will be set at a sufficiently high minimum value to prepare the static synchronous compensator 20 to produce high capacitive currents.

It will be appreciated that the above numerical values are merely intended to help illustrate the working of the invention and may vary depending on the requirements of the voltage source converter and the power application.

The listing or discussion of an apparently prior-published document or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

## Claims

1. A controller for a power electronic device, the power electronic device comprising at least one module, the or each module including at least one switching element and at least one energy storage device, the or each switching element and the or each energy storage device in the or each module arranged to be combinable to selectively provide a voltage source, wherein the controller is programmed to adjust a target voltage reference of the or each energy storage device of the or each module responsive to a reactive current demand of the power electronic device.

2. A controller according to Claim 1 wherein the controller is programmed to increase the target voltage reference of the or each energy storage device of the or each module responsive to an increase in capacitive reactive current demand of the power electronic device.

3. A controller according to Claim 1 or Claim 2 wherein the controller is programmed to reduce the target voltage reference of the or each energy storage device of the or each module responsive to an increase in inductive reactive current demand of the power electronic device.

4. A controller according to any one of the preceding claims wherein the target voltage reference in a capacitive reactive current range of the reactive current demand is higher than the target voltage reference in an inductive reactive current range of the reactive current demand.

5. A controller according to any one of the preceding claims wherein the controller is programmed to adjust the target voltage reference of the or each energy storage device of the or each module responsive to the reactive current demand of the power electronic device by selecting a target voltage reference adjustment value from a look-up table.

6. A controller according to any one of the preceding claims wherein the controller is programmed to adjust the target voltage reference of the or each energy storage device of the or each module responsive to the reactive current demand of the power electronic device by calculating a target voltage reference adjustment value.

7. A controller according to any one of the preceding claims wherein the controller is programmed to set the target voltage reference of the or each energy storage device of the or each module to be at or greater than a predefined minimum value responsive to a rate of change of the reactive current demand towards a capacitive direction exceeding a predefined threshold.

8. A power electronic device comprising at least one module, the or each module including at least one switching element and at least one energy storage device, the or each switching element and the or each energy storage device in the or each module arranged to be combinable to selectively provide a voltage source, wherein the power electronic device further includes a controller according to any one of the preceding claims.

9. A power electronic device according to Claim 8 wherein the power electronic device is a voltage source-based converter.

10. A power electronic device according to Claim 8 or Claim 9 wherein the power electronic device is a static synchronous compensator.

11. A method of controlling a power electronic device, the power electronic device comprising at least one module, the or each module including at least one switching element and at least one energy storage device, the or each switching element and the or each energy storage device in the or each module arranged to be combinable to selectively provide a voltage source, wherein the method includes the step of adjusting a target voltage reference of the or each energy storage device of the or each module responsive to a reactive power demand of the power electronic device.

12. A method according to Claim 11 including the step of increasing the target voltage reference of the or each energy storage device of the or each module responsive to an increase in capacitive reactive current demand of the power electronic device.

13. A method according to Claim 11 or Claim 12 including the step of reducing the target voltage reference of the or each energy storage device of the or each module responsive to an increase in inductive reactive current demand of the power electronic device.

14. A method according to any one of Claims 11 to 13 wherein the target voltage reference in a capacitive reactive current range of the reactive current demand is higher than the target voltage reference in an inductive reactive current range of the reactive current demand.

15. A method according to any one of Claims 11 to 14 including the step of adjusting the target voltage reference of the or each energy storage device of the or each module to be at or greater than a predefined minimum value responsive to a rate of change of the reactive current demand towards a capacitive direction exceeding a predefined threshold.
